(19) Europäisches Patentamt

European Patent Office

Office européen des brevets

(11) **EP 1 556 744 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(21) Anmeldenummer: **03785630.9**

(22) Anmeldetag: **17.10.2003**

(51) Int Cl.:
***G05B 19/18*** *(2006.01)*

(86) Internationale Anmeldenummer:
**PCT/EP2003/011568**

(87) Internationale Veröffentlichungsnummer:
**WO 2005/047995 (26.05.2005 Gazette 2005/21)**

(54) **NEUTRALDATEN-COMPUTERSTEUERUNGSSYSTEM FÜR EINE WERKZEUGMASCHINE ZUR HERSTELLUNG VON WERKSTÜCKEN MIT SCHRAUBENMANTELFLÄCHE SOWIE EINE ZUGEHÖRIGE WERKZEUGMASCHINE**

NEUTRAL DATA COMPUTER CONTROL SYSTEM FOR A MACHINE TOOL USED TO PRODUCE WORKPIECES WITH A THREADED SURFACE AND ASSOCIATED MACHINE TOOL

SYSTEME DE COMMANDE INFORMATIQUE DE DONNEES NEUTRES POUR UNE MACHINE-OUTIL SERVANT A LA FABRICATION DE PIECES USINEES COMPORTANT UNE SURFACE D'ENVELOPPE FILETEE ET MACHINE-OUTIL ASSOCIEE

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**27.07.2005 Patentblatt 2005/30**

(73) Patentinhaber: **Trinary Anlagenbau GmbH**
**41061 Mönchengladbach (DE)**

(72) Erfinder:
 • **BLUMBERG, Manfred**
  **51688 Wipperfürth (DE)**
 • **DIRRICHS, Stefan**
  **42929 Wermelskirchen (DE)**

 • **LONDON, Wolfgang**
  **42499 Hückeswagen (DE)**
 • **TÖPFER, Gary**
  **42897 Remscheid (DE)**

(74) Vertreter: **Kiani, Nassim et al**
**Kiani & Springorum**
**Patent- und Rechtsanwälte**
**Taubenstrasse 4**
**40479 Düsseldorf (DE)**

(56) Entgegenhaltungen:
**EP-A- 0 709 157          EP-B- 0 784 525**
**DE-A- 19 545 083       US-A- 5 604 677**
**US-B1- 6 489 741**

## Beschreibung

Die vorliegende Erfindung betrifft ein Neutraldaten-Computersteuerungssystem für eine Werkzeugmaschine mit Computersystem, Computerprogramm und Computerprogrammprodukten, sowie einer zugehörigen Werkzeugmaschine.

Bei der Fertigung von Werkzeugmaschinen tritt heutzutage vor dem Hintergrund mehr und mehr vernetzter Fertigungsprozesse und deren Standardisierung in der Industrie das Problem in den Vordergrund, auch die zur Ansteuerung der Werkzeugmaschinen notwendigen Computersysteme mit in diesen Prozeß mit einzubeziehen. Hierbei ist es ein Ziel, soweit technisch möglich, einheitliche Maschinensteuerungssysteme vorzusehen, die dem Anwender - etwa beim Wechsel eines konkreten Maschinentyps oder auch zur verbesserten Datenhaltung und Archivierung - eine möglichst hohe Einheitlichkeit der Maschinensteuerparameter für die Produkte aus seinem Werkstückprogramm bietet.

Derartige Ansätze werden für verschiedene Werkzeugmaschinentypen schon seit einiger Zeit verfolgt, so auch für Kegelradverzahnungsmaschinen, denen hier die Aufmerksamkeit gilt.

Für Kegelradverzahnungsmaschinen existieren hier etwa Lösungen, bei denen die dortigen Maschinensteuerparameter einer ganzen Maschinenfamilie in einem einheitlichen Datenmodell mit allen in der Maschinenfamilie infrage kommenden anzusteuernden Achsen zusammengefaßt werden, welches dann im Einzelfall auf die jeweilige reale Maschine - sofern dies möglich ist, also die mit den Maschinensteuerparametern angesteuerten Achsen auch tatsächlich vorhanden sind - abgebildet wird.

Für Verzahnungsmaschinen zum Formfräsen oder -schleifen von Werkstücken mit Schraubenmantelfläche, also insbesondere Stirnräder, Schnecken und Rotoren existiert - obwohl selbstverständlich aus den o.a. Gründen auch hier wünschenswert - ein solches System hingegen noch nicht.

Der Grund hierfür liegt in einer besonderen technischen Schwierigkeit, die beim Formschleifen dieser Werkstücke zu bewältigen ist: Mehrachsige Positioniersysteme, wie sie auch Werkzeugmaschinen benötigen, bedürfen der Synchronisation der einzelnen Bewegungen untereinander, so daß eine definierte Kurve im dreidimensionalen Raum durchfahren wird. Dies wird dadurch erreicht, daß eine der Achsen nicht nur ihrer eigenen Positionierung, sondern als Leit- oder Führungsachse auch der Synchronisierung der anderen zu positionierenden Achsen dient.

Ein solches Verfahren nach dem Stand der Technik findet sich etwa in der EP 0 784 525, die ein Verfahren zum Herstellen von Zahnflankenmodifikationen bei Kegelrädern betrifft. Die dortigen Achsen werden vorzugsweise mittels einer Polynomfunktion der Form

$$f(\Theta) \;=\; a_0 \;+\; \frac{a_1}{1!}\cdot\Delta\Theta \;+\; \frac{a_2}{2!}\cdot\Delta\Theta^2 \;+\; \frac{a_3}{3!}\cdot\Delta\Theta^3 \;+\; \frac{a_4}{4!}\cdot\Delta\Theta^4$$

angesteuert, wobei $f(\theta)$ die Positionierfunktion für die jeweilige anzusteuernde Achse in Abhängigkeit von der Bewegung der Leitachse $\theta$ ist. Die Koeffizienten $a_0$, $a_1$, $a_2$ $a_3$ und $a_4$ dienen dabei als weitere Parameter der Positionskontrolle der durch die Funktion $f(\theta)$ angesteuerten jeweiligen Achse.

Als Leitachse dient dabei nach dem Stand der Technik immer eine der ansteuerbaren mechanischen Achsen der Werkzeugmaschine. Bei Kegelradverzahnungsmaschinen, die nach dem Wälzverfahren arbeiten und daher, wie auch im Falle der EP 0 784 525, eine Wiege aufweisen, wird üblicherweise diese immer notwendige Wiege als Leitachse, mithin also ihre Wälzbewegung als Führungsbewegung zur Synchronisation der anderen Achsbewegungen verwendet. Auf diese Weise existiert - auch unabhängig von der weiteren konkreten

Ausgestaltung des jeweiligen Maschinentyps - immer eine Maschinenachse, die wälzprozeßbedingt einheitlich als Leitachse verwendet werden kann.

Für Formschleifmaschinen hingegen, die keine Wiege oder vergleichbare Achse aufweisen, stellt sich für den Fall eines Vereinheitlichungsversuches der Maschinensteuerparameter für unterschiedliche Maschinentypen sogleich das Problem der geeigneten Wahl einer solchen einheitlichen Leitachse oder aber die Frage nach dem etwaigen Verzicht hierauf.

Grundsätzlich ist es hierbei natürlich möglich, auf eine solche einheitliche Leitachse zu verzichten und stattdessen die jeweilig im Einzelfall als Leitachse verwendete Achse in den Maschinensteuerparametern anzugeben. Eine solche Möglichkeit zu schaffen, kann bereits zu einer gewissen Vereinheitlichung der Maschinensteuerparameter führen. Gleichwohl ist dies unbefriedigend, da sich dann im Falle eines Maschinentypwechsels auf eine Maschine, die die ausgewählte Leitachse nicht aufweist, nicht nur das Problem stellt, neue Maschinensteuerparameter für die Leitachse zu erstellen, sondern es zudem aufgrund der o.a. dargestellten Abhängigkeiten der anderen Achsen von der Leitachse auch immer sogleich erforderlich wird, auch für alle anderen von der Leitachse abhängigen Achsen neue Maschinensteuerparameter zu generieren. Ist hingegen eine andere als die Leitachse nicht vorhanden, so kann versucht werden, deren Positionierergebnis am Werkstück dadurch zu erreichen, daß andere nun auf dem neuen Maschinentyp stattdessen vorhandene weitere Achsen durch Maschinensteuerparameter entsprechend angesteuert werden, wobei die übrigen Achsen mit ihren jeweiligen Maschinensteuerparametern unberührt bleiben.

So kann dann etwa eine nicht vorhandene positionierbare Schwenkachse zur Verschwenkung von Werkstück und Werkzeug gegeneinander mittels einer Drehung der Werkzeugachse in der Vertikalen durch eine Schwenkachse zur Verschwenkung von Werkstück und Werkzeug gegeneinander mittels einer Drehung der Werkstückachse in der Horizontalen ersetzt werden, ohne daß die Maschinensteuerparameter etwa einer Radialzustellungsachse oder einer positionierbaren Drehachse eines Spannkopfes zur Drehung des Werkstücks in der Werkstückhalterung betroffen wären.

Voraussetzung hierfür ist jedoch, daß eine für das gesamte Steuerungskonzept aller infrage kommenden Maschinentypen einheitliche Leitachse angegeben werden kann. Dies scheitert im Falle von Formschleifmaschinen, wie bereits o.a. schon daran, daß hier - im Gegensatz zu Maschinen, die nach einem Wälzverfahren arbeiten - keine grundsätzlich immer notwendige Wälzbewegung existiert, die immer als Leitbewegung zu dienen vermag.

Es ist daher Aufgabe der vorliegenden Erfindung ein Computersteuerungssystem für eine Werkzeugmaschine zur Herstellung von Werkstücken mit Schraubenmantelfläche anzugeben, daß eine Verwendung der jeweiligen Maschinensteuerparameter für unterschiedliche Maschinentypen mit unterschiedlichen ansteuerbaren Achsen so erlaubt, daß bei einem Wechsel der anzusteuernden Maschine -- im Rahmen des geometrisch Möglichen - möglichst wenige Maschinensteuerparameter zur Ansteuerung der Achsen neu gebildet werden müssen.

Dies wird durch eine mehrachsige Werkzeugmaschine zur Herstellung von Werkstücken mit Schraubenmantelfläche nach Anspruch 1 erreicht.

Auf diese Weise wird eine zusätzliche virtuelle Achse geschaffen, die selbst keine mechanische Achse der Werkzeugmaschine ansteuert, gleichwohl aber andere Achsen zu synchronisieren vermag. Dies kann etwa durch ein nur von der Zeit abhängiges Polynom, wie folgt geschehen

$$L_{Virt}(t) \;=\; a_{virt.,0} \;+\; a_{virt.,1}\cdot t \;+\; a_{virt.,2}\cdot t^2 \;+\; a_{virt.,3}\cdot t^3$$

und zwar ohne, daß der so ermittelte Wert $L_{virt}(t)$ zur unmittelbaren Ansteuerung einer mechanischen Achse der Werkzeugmaschine verwendet würde. Vielmehr geht dieser etwa wie folgt

$$Achspos_1(L_{Virt}(t)) \;=\; a_{1,0} \;+\; a_{1,1}\cdot L_{Virt}(t) \;+\; a_{1,2}\cdot L_{Virt}(t)^2 \;+\; a_{1,3}\cdot L_{Virt}(t)^3$$

$$Achspos_2(L_{Virt}(t)) \;=\; a_{2,0} \;+\; a_{2,1}\cdot L_{Virt}(t) \;+\; a_{2,2}\cdot L_{Virt}(t)^2 \;+\; a_{2,3}\cdot L_{Virt}(t)^3$$

$$Achspos_3(L_{Virt}(t)) \;=\; a_{3,0} \;+\; a_{3,1}\cdot L_{Virt}(t) \;+\; a_{3,2}\cdot L_{Virt}(t)^2 \;+\; a_{3,3}\cdot L_{Virt}(t)^3$$

synchronisierend in die Bildung der tatsächlich zur Ansteuerung der mechanischen Achsen verwendeten Positionswerte $Achspos_i$ (hier 3 Achsen, also i=1 bis 3) ein.

Durch das Vorsehen einer solchen virtuellen Achse kann somit die Bildung der Achspositionen für die Ansteuerung der mechanischen Achsen völlig unabhängig von jedweder tatsächlichen Bewegung jeder Achse der Werkzeugmaschine gehalten werden, wodurch es daher möglich wird, bei einem Wechsel der anzusteuernden Maschine - im Rahmen des geometrisch Möglichen - nur die Maschinensteuerparameter neu zu bilden, die der Ansteuerung von Achsen dienen, die bei der neuen Maschine zusätzlich vorhanden sind. Hingegen können die Maschinensteuerparameter für Achsen, die vor und nach dem Wechsel der Maschine anzutreffen sind, beibehalten werden. Im Falle der o.a. Polynome heißt dies etwa, daß die die Bahnkurve definierenden Koeffizienten $a_{i,j}$ für diese Achsen nicht neu gebildet werden müssen.

Zum hier verwendeten Begriff der virtuellen Achse sei im Hinblick auf die Verwendung dieses Begrifffes im Stand der Technik angemerkt, daß hier in soweit eine einheitliche Begriffsbildung vorliegt, als daß es sich hierbei um eine nur in der jeweiligen verwendeten Steuer- und/oder Regeleinrichtung gebildete Achse handelt, die kein unmittelbares Pendant in den tatsächlich vorhandenen mechanischen Achsen der jeweiligen Werkzeugmaschine haben. Unterschiede zum Stand der Technik etwa nach der DE 42 91 619 C2, welche der US 5 604 677 entspricht, bestehen hier jedoch dahingehend, daß die dortige virtuelle Achse (mitunter dort auch Softachse genannt) aus den dortigen tatsächlichen mechanischen Achsen gewissermaßen softwaremäßig kombiniert wird. Demgegenüber dient die virtuelle Achse im Sinne der hier vorliegenden Erfindung keiner eigenen Ansteuerung mechanischer Achsen, insbesondere keiner Software-Synthese zusätzlicher, in der mechanischen Realität der anzusteuernden Werkzeugmaschine keine Entsprechung findenden Achsen, sondern nur der Synchronisierung der Ansteuerung anderer Achsen.

Demgemäß wird der erfindungsgemäße Erfolg auch durch ein Verfahren nach Anspruch 28 erreicht, wobei zunächst eine virtuelle Achse als Leitachse für andere Achsen parametriert wird, und sodann während des Betriebs der Maschine zur Bearbeitung des Werkstücks die jeweiligen mechanischen Achsen durch die Steuer- und/oder Regeleinrichtung mittels einer frei wählbaren Funktion oder Relation angesteuert werden, welche vom Wert der als Leitachse für andere Achsen parametrierten, durch die Steuer- und/oder Regeleinrichtung mittels einer von der Zeit abhängigen frei wählbaren Funktion oder Relation gebildeten, virtuellen Achse und auch vom Wert weiterer Parameter abhängig ist, um so mit Hilfe der virtuellen Leitachse die Synchronisation der Achspositionen untereinander zu erreichen.

Vorzugsweise weist die erfindungsgemäße mehrachsige Werkzeugmaschine mindestens fünf ansteuerbare mechanische Achsen zur Positionierung von Werkstück und Werkzeug in Relation zueinander auf, was die Fertigung rotationssymmetrischer Werkstücke ermöglicht. Will man auch nichtrotationssymmetrische Werkstücke, wie etwa Schnecken fertigen, so bedarf es zumindest einer zusätzlichen Achse, die zur Verschwenkung von Werkstück und Schleifscheibe gegeneinander in der Horizontalen vorgesehen ist, wie noch zu sehen sein wird.

Besonders bevorzugterweise ist die mehrachsige Werkzeugmaschine nach der vorliegenden Erfindung dadurch gekennzeichnet, daß als Werkzeug eine Schleifscheibe und als mechanische Achsen mindestens eine

- positionierbare Radialzustellungsachse, auch mit χ bezeichnet, für die Schleifscheibe,

- ein in Relation zur Radialzustellungsachse horizontal orthogonal positionierbarer Schleifschlitten, auch mit ζ bezeichnet, zur Positionierung der Schleifscheibe in Verschieberichtung des Schleifschlittens,

- eine positionierbare Drehachse, auch mit β bezeichnet, eines Spannkopfes zur Drehung des Werkstücks in der Werkstückhalterung,

- eine positionierbare Schwenkachse, auch mit τ bezeichnet, zur Verschwenkung von Werkstück und Schleifscheibe gegeneinander mittels einer Drehung der Schleifscheibenachse oder ihrer Parallelprojektion in der vertikalen Ebene, auch mit B bezeichnet, sowie

- eine Drehachse, auch mit ω bezeichnet, für den Antrieb der Schleifscheibe vorgesehen sind.

Auch kann als mechanische Achse eine positionierbare Verschiebeachse, auch mit δ bezeichnet, zur Kontrolle einer Vorschubposition der Schleifscheibe entlang der Schleifscheibenachse vorgesehen sein.

Bevorzugterweise weist die erfindungsgemäße mehrachsige Werkzeugmaschine auch eine Schwenkachse, auch bezeichnet mit σ, als mechanische Achse zur Verschwenkung von Werkstück und Schleifscheibe gegeneinander mittels einer Drehung der Schleifscheibenachse oder ihrer Parallelprojektion in der horizontalen Ebene, auch bezeichnet mit A, auf, was auch die schon angesprochene Fertigung nicht rotationssysmmetrischer Werkstücke erlaubt.

Alternativ oder auch zusätzlich kann dies auch durch eine mechanische Schwenkachse, auch mit γ bezeichnet, zur Verschwenkung von Werkstück und Schleifscheibe gegeneinander mittels einer Drehung der Werkstückachse oder ihrer Parallelprojektion in der horizontalen Ebene, auch mit A bezeichnet, erreicht werden.

Ferner kann als mechanische Achse auch eine Verschiebeachse, auch bezeichnet mit η, vorgesehen sein, die der vertikalen Verschiebung von Werkstück und Schleifscheibe, gegeneinander dient.

Die virtuelle Achse selbst wird durch die Steuer- und/oder Regeleinrichtung mittels einer frei wählbaren Funktion oder Relation gebildet, die von der Zeit abhängig ist.

Die vorliegende Erfindung, die die virtuelle Achse mittels einer frei wählbaren Funktion oder Relation bildet, weist auch einige besondere Vorteile auf:

Beim Schleifen von Werkstücken mit Schraubenmantelfläche, wie insbesondere Stirnrädern (einer Schraubenfläche die u.U. auch eine Steigung von Null des Gewindeganges, nämlich bei Geradverzahnungen, aufweist), Schnecken oder Rotoren ist es oft so, daß hier eine einzige nicht-virtuelle Leitachse für den gesamten Werkstückfertigungsprozeß oftmals nicht ausreicht, da deren Führungs- oder Leitbewegung in Anbetracht der in der Realität begrenzten numerischen Genauigkeit oftmals zu minimal wird, um in Abhängigkeit hiervon noch Ansteurungsfunktionen (oder -relationen) mit genügender Bewegung für die anderen Achsen berechnen zu können. Besonders deutlich wird dies etwa für den Fall, wo etwa ein in Relation zu einer Radialzustellungsachse horinzontal orthogonal positionierbarer Schleifschlitten zur Positionierung der Schleifscheibe in Verschieberichtung des Schleifschlittens als Leitachse Verwendung findet und dann auf dem Werkstück eine orthogonal zur Werkstückdrehachse verlaufende Kante etwa als Abschluß einer Schraubenmantelfläche zu fräsen ist, wie dies etwa bei Werkstücken vorkommt, die mehrere voneinander, etwa durch runde Achsabschnitte separierte oder zumindest von ihrer Geometrie unterschiedliche Schraubenflächen aufweisen. (In diesem Zusammenhang sei angeführt, daß auch Werkstücke mit solchen teilweisen oder abschnittsweisen Schraubenflächen als Werkstücke mit Schraubenmatelfläche i.S. der vorliegenden Erfindung angesehen werden.) Bei dem vorgenannten Fall kommt nämlich die Bewegung des Schleifschlittens an der Stelle der Senkrechten zur Werkstückachse vollständig zum Stehen und kann somit selbst bei unbegrenzter numerischer Auflösung nicht mehr als Führungsbewegung dienen; der Schleifschlitten ist mithin als Leitachse an dieser Stelle unbrauchbar. Es ist daher erforderlich, an derartigen Stellen einen Leitachsenwechsel durchzuführen, was einheitliche Maschinensteuerparameter für unterschiedliche Maschinenmodelle um so mehr erschwert, da dann im Falle eines Maschinentypwechsels die eingangs bereits erwähnten Anpassungsschwierigkeiten auf die neue Maschine u.U. für jede verwendete Leitachse auftreten. Überdies sei bemerkt, daß ein derartiger Achswechsel an der Stelle des Werkstücks, wo er vollzogen wird, aufgrund der hiermit verbundenen Unstetigkeit der Ansteuerung der Achsen infolge dessen immer auch zu unerwünschten Fertigungsspuren auf dem zu erstellenden Werkstück führt.

Wird nun die virtuelle Achse nach der vorliegenden Erfindung mittels einer frei wählbaren Funktion oder Relation gebildet, so kann dies so geschehen, daß diese virtuelle Leitachse über den gesamten Fertigungsprozeß ohne Leitachswechsel taugt, da auf diese Weise jede durch den Fertigungprozeß bedingte Abhängigkeit der Leitachse aufgrund deren völliger Wahlfreiheit vermieden werden kann. Auf diese Weise eignet sich die vorliegende Erfindung vorteilhafterweise auch für den Fall des Betriebs nur eines einzigen infrage kommenden Maschinentyps, da in diesem Falle bei der Verwendung der wahlfreien erfindungsgemäßen virtuellen Achse keine Leitachswechselprobleme der eingangs geschilderten Art mehr auftreten und somit auch keine infolge dessen auftretenden Fehler mehr an den Werkstücken zutage treten. Wählt man hingegen die virtuelle Leitachse fest, so sind prozeßbedingte Abhängigkeiten womöglich nicht auszuschließen, was dann zu den bereits erwähnten numerisch ungünstig konditionierten Systemen führen kann.

Als frei wählbare Funktion kommt insbesondere, wie ja auch schon im o.a. Beispiel dargelegt, eine Polynomfunktion, aber beispielsweise auch eine Kreisrelation infrage. Auch kann eine frei wählbare Relation ebenso durch eine Wertetabelle definiert werden.

Auch die Ansteuerung der jeweiligen mechanischen Achse durch die Steuer- und/oder Regeleinrichtung erfolgt mittels einer frei wählbaren Funktion oder Relation wobei die jeweilige mechanische Achse, wie ja auch schon eingangs dargelegt, vom Wert einer als Leitachse fungierenden virtuell gebildeten Achse abhängig ist, um so die Synchronisation der Achspositionen untereinander zu erreichen.

Auch wird die jeweilige Achse dabei zur Ansteuerung der gewünschten Positionswerte vom Wert weiterer Parameter abhängig gemacht. Wie bereits dargelegt kann dabei als frei wählbare Funktion eine Polynomfunktion dienen, die auch vom Wert einer der virtuellen Achsen und Polynomkoeffizienten abhängig ist.

Ebenso eignet sich als frei wählbare Relation für die jeweilige mechanische Achse aber auch eine Kreisrelation, die vom Wert einer der virtuellen Achsen und Kreiskonstanten, vorzugsweise einem Kreisradius und einem durch ein Koordinatenpaar gegebenen Mittelpunkt sowie einer Drehrichtung abhängig ist.

Gleiches gilt für die Ansteuerung der jeweiligen mechanischen Achse, die durch die Steuer- und/oder Regeleinrichtung mittels einer frei wählbaren Relation erfolgt, welche durch eine Tabelle von Koordinaten gegeben ist, ebenso wie für alle anderen, für die Erreichung der angestrebten Werkstückgeometrie geeignet erscheinenden Funktionen und/oder Relationen.

Im Falle der Verwendung einer durch eine Koordinatentabelle gebildeten Relation, wird diese vorzugsweise durch eine X-Koordinate, eine Y-Koordinate und einen Normalenwinkel, vorzugsweise im Stirnschnitt betrachtet, gebildet.

In einer weiteren bevorzugten Ausführungsform nach der vorliegenden Erfindung ist die mehrachsige Werkzeugmaschine dadurch gekennzeichnet, daß auch ein Speicher vorgesehen ist, in dem Maschinensteuerparameter gespeichert sind, auf die seitens der Steuer- und/oder Regeleinrichtung zugegriffen wird, was eine flexible Realisierung der vorliegenden Erfindung durch eine Computersteuerung ermöglicht.

In diesem Speicher kann nämlich eine Datenstruktur vorgesehen werden, die die Parametrierung der virtuellen Achse als Leitachse für andere Achsen erlaubt, wobei es auch möglich ist, daß hier eine Datenstruktur vorliegt, die auch die Parametrierung irgendeiner mechanischen Achse als Leitachse für andere Achsen erlaubt, etwa um auch ältere, noch nicht auf das erfindungsgemäße Computersteuerungssystem abgestimmte Maschinensteuerparameter verwenden zu können.

Auch die Funktions- oder Relationsdefinition für die Bildung der virtuellen Achse wie auch die Funktions- oder Relationsdefinition für die Ansteuerung der jeweiligen mechanischen Achse durch die Steuer- und/oder Regeleinrichtung kann in dem Speicher flexibel abgelegt werden.

Dabei können Datenfelder zur Identifikation vordefinierter Funktions- oder Relationstypen dienen, welcher für die Funktions- oder Relationsdefinition der jeweiligen mechanischen Achse verwendet wird. Eine solche Vordefinition häufig verwendeter Funktions- und/oder Relationstypen erleichtert dabei die Hinterlegung der Definition im Speicher. Als solchermaßen vordefinierte Funktionstypen kommen vorzugsweise etwa eine Polynomfunktion, etwa sechsten Grades, mit Polynomkoeffizienten als Parametern oder auch wiederum eine Kreisrelation mit Kreisradius und einem durch ein Koordinatenpaar gegebenen Mittelpunkt sowie einer Drehrichtung als Parametern infrage. Ebenso kann als Relationstyp aber auch eine Koordinatentabelle mit Koordinaten als Parametern vordefiniert sein; wobei bevorzugterweise als Koordinaten jeweils eine X-Koordinate, eine Y-Koordinate und ein Normalenwinkel, vorzugsweise im Stirnschnitt betrachtet, verwendet werden.

In einer weiteren bevorzugten Ausführungsform einer mehrachsigen Werkzeugmaschine nach der vorliegenden Erfindung, liegt in dem Speicher, in dem Maschinensteuerparameter gespeichert sind, auf die seitens der Steuer- und/oder Regeleinrichtung zugegriffen wird, eine Datenstruktur vor, die zur Aufnahme einer Kennzeichnung der durch die Ansteuerung der jeweiligen mechanischen Achse durch die Steuer- und/oder Regeleinrichtung bearbeiteten Werkstückflanke, vorzugsweise einer Kennzeichnung für eine rechte oder eine linke Flanke, vorgesehen ist. Dieser Parameter wird von der Maschine im Falle nicht symmetrisch ausgebildeter Schleifscheiben, wie etwa zur Fertigung von Schnecken benötigt, um die jeweilige Flanke mit der richtigen Seite des Werzeugs anzufahren. Auch ermöglicht dieser Steuerparameter eine der jeweiligen Flanke entsprechende Kraftsteuerung oder - regelung.

Vorzugsweise liegt in dem Speicher, in dem Maschinensteuerparameter gespeichert sind, auf die seitens der Steuer- und/oder Regeleinrichtung zugegriffen wird, auch eine Datenstruktur vor, die zumindest eine Gruppe von Maschinensteuerparametern, die einem Teilbereich des Werkstücks entspricht, als Segment unter einer gemeinsamen Segmentidentifikation, vorzugsweise einer Segmentnummer, zusammenfasst, wobei vorzugsweise immer eine solche Gruppe von Maschinensteuerparamtern als Segment zusammengefaßt sind, bei denen die gleiche Achse als Leitachse parametriert ist.

Die Strukturierung der Maschinensteuerparameter zu Segmenten ermöglicht es, eine in der Realität gegebene Segmentierung des Werkstücks auch in der Strukturierung der Maschinensteuerparameter abzubilden, was deren Übersichtlichkeit und damit auch die Möglichkeit ihrer Zuordnung zu Werkstückanschnitten verbessert.

Die vorstehend beschriebenen Ausführungsformen einer erfindungsgemäßen mehrachsigen

Werkzeugmaschine mit einem Speicher dienen somit der Abbildung von Maschinensteuer-parametern in diesem Speicher, welche im Betrieb der Maschine Maschinenfunktionen zur Werkstückfertigung auslösen. Dies kann aber nicht nur durch eine Hinterlegung im Speicher der Maschine geschehen, sondern auch durch das Einlesen eines mit entsprechenden Maschinensteuerparametern versehenen Datenträgers, wie etwa einer Diskette, einer CD oder auch einer DVD oder auch durch das Einlesen eines elektronischen Trägersignals mit diesen Maschinensteuerparametern in die erfindungsgemäße mehrachsige Werkzeugmaschine, etwa über eine Datenleitung, wie sie vorzugsweise auch in einem Datennetzwerk Verwendung findet. Ein solcher Datenträger oder ein solches Datenträgersignal ist dabei entsprechend der hier vorliegenden Erfindung zum Einlesen der wie vorstehend beschrieben erfindungsgemäß aufgebauten Daten in die erfindungsgemäße mehrachsige Werkzeugmaschine zu deren Steuerung entsprechend der hier vorliegenden Erfindung aufgebaut.

In jedem Falle ist ein solcher Datenträger oder ein solches elektronisches Trägersignal entsprechend Anspruch 29, erfindungsgemäß mit Maschinensteuerparametern zum Einlesen in eine mehrachsige Werkzeugmaschine parametriert, wobei der Datenträger oder das elektronische Trägersignal die Werkzeugmaschine mittels dieser Datenstruktur bei dem Einlesen oder nach dem Einlesen nach dem o.a. erfindungsgemäßen Verfahren ansteuert.

Auch dient der Durchführung der vorliegenden Erfindung ein Verfahren zur Erzeugung von Maschinensteuerparametern für eine mehrachsige Werkzeugmaschine, welches erfindungsgemäß dadurch gekennzeichnet ist, daß es einen Datenträger oder ein elektronisches Trägersignal mit Maschinensteuerparametern wie vorstehend dargestellt erzeugt. Selbstverständlich kann dieses Verfahren auch auf einem Computersystem mit mindestens einer Datenverarbeitungseinheit und mindestens einem Speicher realisiert sein, üblicherweise etwa als Computerprogramm, wobei es die entsprechenden Instruktionen aufweist, die zur Durchführung des Verfahrens eingerichtet sind. Ein solches Computerprogramm kann dabei in jeder Form vorliegen, insbesondere aber auch als Computerprogrammprodukt auf einem computerlesbaren Medium, wie etwa Diskette, CD oder DVD, wobei es Computerprogramm-Code-Mittel aufweist, bei dem jeweils nach Laden des Computerprogramms ein Computer durch das Programm zur Durchführung des erfindungsgemäßen Verfahrens veranlaßt wird. Es kann aber etwa auch als Computerprogrammprodukt, welches ein Computerprogramm auf einem elektronischen Trägersignal aufweist, bei dem jeweils nach Laden des Computerprogramms ein Computer durch das Programm zur Durchführung des erfindungsgemäßen Verfahrens veranlaßt wird, vorliegen.

Aus den vorstehend beschriebenen einzelnen unterschiedlichen Elementen der vorliegenden Erfindung kann in Gesamtheit gesehen ein Neutraldaten-Computersteuerungssystem für eine mehrachsige Werkzeugmaschine zur Herstellung von Werkstücken mit Schraubenmantelfläche mit

- einem erfindunsggemäßen Computersystem zur Erzeugung von Maschinensteuerparametern für eine mehrachsige Werkzeugmaschine mit mindestens einer Datenverarbeitungseinheit und mindestens einem Speicher, wobei die Datenverarbeitungseinheit programmtechnisch so eingerichtet ist, daß sie zumindest einen Datenträger oder ein elektronisches Trägersignal mit Maschinensteuerparametern nach der vorliegenden Erfindung erzeugt, oder

- einem solchen Computerprogramm oder Computerprogrammprodukt,

- und mindestens einer erfindungsgemäßen mehrachsigen Werkzeugmaschine vorgesehen sein. Details eines solchen Systems nach der vorliegenden Erfindung können im weiteren den Ausführungsbeispielen entnommen werden.

Im folgenden werden nicht einschränkend zu verstehende Ausführungsbeispiele der vorliegenden Erfindung anhand der Zeichnung besprochen. In dieser zeigen:

Fig.1 ein erfindungsgemäßes Neutraldaten-Computersteuerungssystem für eine mehrachsige Werkzeugmaschine zur Herstellung von Werkstücken mit Schraubenmantelfläche,

Fig.2 ein abstraktes Modell einer erfindungsgemäßen mehrachsigen Werkzeugmaschine zur Herstellung von Werkstücken mit Schraubenmantelfläche mit diversen mechanischen Achsen, und

Fig.3 ein Werkstück mit Schraubenmantelfläche zur Herstellung auf einer erfindungsgemäßen mehrachsigen Werkzeugmaschine.

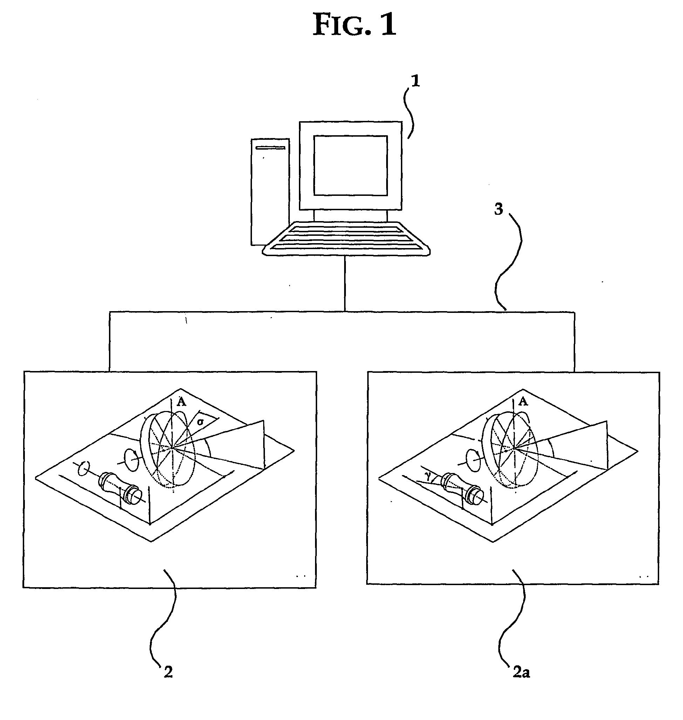

Fig. 1 zeigt ein erfindungsgemäßes Neutraldaten-Computersteuerungssystem für eine mehrachsige Werkzeugmaschine zur Herstellung von Werkstücken mit Schraubenmantelfläche und zwar mit .

- einem erfindungsgemäßen Computersystem 1 zur Erzeugung von Maschinensteuerparametern für eine mehrachsige Werkzeugmaschine 2, 2a mit mindestens einer Datenverarbeitungseinheit und mindestens einem Speicher, wobei die Datenverarbeitungseinheit programmtechnisch so eingerichtet ist, daß sie hier in einem Datennetzwerk ein elektronisches Trägersignal 3 mit Maschinensteuerparametern nach der vorliegenden Erfindung erzeugt

- und einer ersten erfindungsgemäßen mehrachsigen Werkzeugmaschine 2 sowie einer zweiten solchen 2a.

Vorliegend ist es nun so, daß die erste Maschine 2 (neben anderen Achsen) eine mechanische Schwenkachse $\sigma$ zur Verschwenkung von Werkstück und Schleifscheibe gegeneinander mittels einer Drehung der Schleifscheibenachse oder ihrer Parallelprojektion in der horizontalen Ebene A aufweist; eine Möglichkeit die der zweiten Maschine 2a fehlt. Diese verfügt jedoch über eine Schwenkachse $\gamma$ zur Verschwenkung von Werkstück und Schleifscheibe gegeneinander mittels einer Drehung der Werkstückachse oder ihrer Parallelprojektion in der horizontalen Ebene A. Im vorliegenden Neutraldaten-Computersystem ist es nun leicht möglich, Maschinensteuerparameter, die vom Computersystem 1 für die erste erfindungsgemäße Maschine 2 erzeugt wurden, auch für die zweite erfindungsgemäße Werkzeugmaschine 2a zu verwenden, wenn die erzeugten Maschinensteuerparameter von einer virtuellen Leitachse nach der vorliegenden Erfindung Gebrauch machen. Beide Maschinen 2, 2a verfügen über eine virtuelle Leitachse, so daß bei einem Maschinenwechsel von der ersten Maschine 2 zur zweiten Maschine 2a nur die Maschinensteuerparameter für die Schwenkachse $\gamma$ statt der Schwenkachse $\sigma$ gebildet werden müssen. Alle anderen Maschinensteuerparameter können hingegen, da über die virtuelle Leitachse gekoppelt, beibehalten werden.

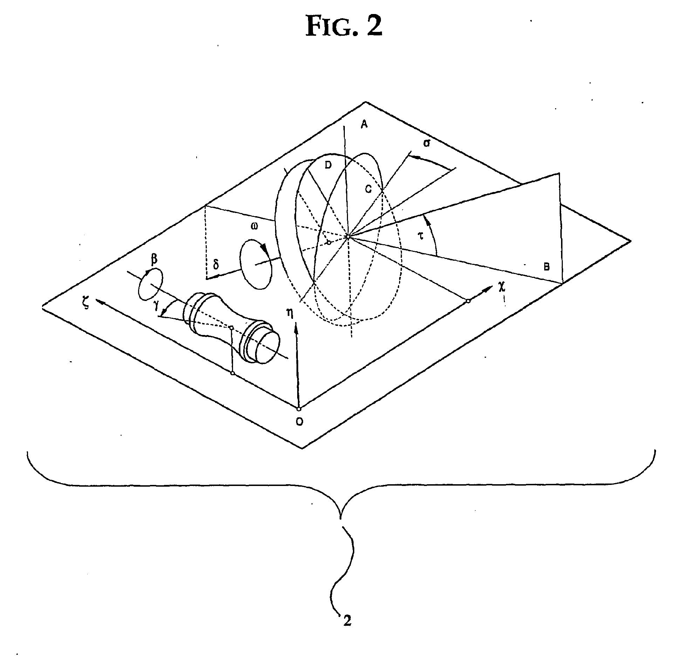

Fig. 2 zeigt ein abstraktes (verschiedene konkrete Ausgestaltungsmöglichkeiten übergreifendes) Modell einer erfindungsgemäßen mehrachsigen Werkzeugmaschine zur Herstellung von Werkstücken mit Schraubenmantelfläche mit diversen mechanischen Achsen und zwar mit

- einer positionierbaren Radialzustellungsachse $\chi$ für die Schleifscheibe,

- einem in Relation zur Radialzustellungsachse horizontal orthogonal positionierbaren Schleifschlitten $\zeta$ zur Positionierung der Schleifscheibe in Verschieberichtung des Schleifschlittens,

- einer positionierbaren Drehachse $\beta$ eines Spannkopfes zur Drehung des Werkstücks in der Werkstückhalterung, einer positionierbare Schwenkachse $\tau$ zur Verschwenkung von Werkstück und Schleifscheibe gegeneinander mittels einer Drehung der Schleifscheibenachse oder ihrer Parallelprojektion in der vertikalen Ebene B,

- einer Drehachse ω für den Antrieb der Schleifscheibe,

- einer positionierbaren Verschiebeachse δ zur Kontrolle einer Vorschubposition der Schleifscheibe entlang der Schleifscheibenachse,

- einer Schwenkachse σ zur Verschwenkung von Werkstück und Schleifscheibe gegeneinander mittels einer Drehung der Schleifscheibenachse oder ihrer Parallelprojektion in der horizontalen Ebene A,

- einer Verschiebeachse η zur vertikalen Verschiebung von Werkstück und Schleifscheibe gegeneinander, sowie

- einer Schwenkachse γ zur Verschwenkung von Werkstück und Schleifscheibe gegeneinander mittels einer Drehung der Werkstückachse oder ihrer Parallelprojektion in der horizontalen Ebene A

zur besseren Veranschaulichung der in Bezug genommenen geometrischen Verhältnisse.

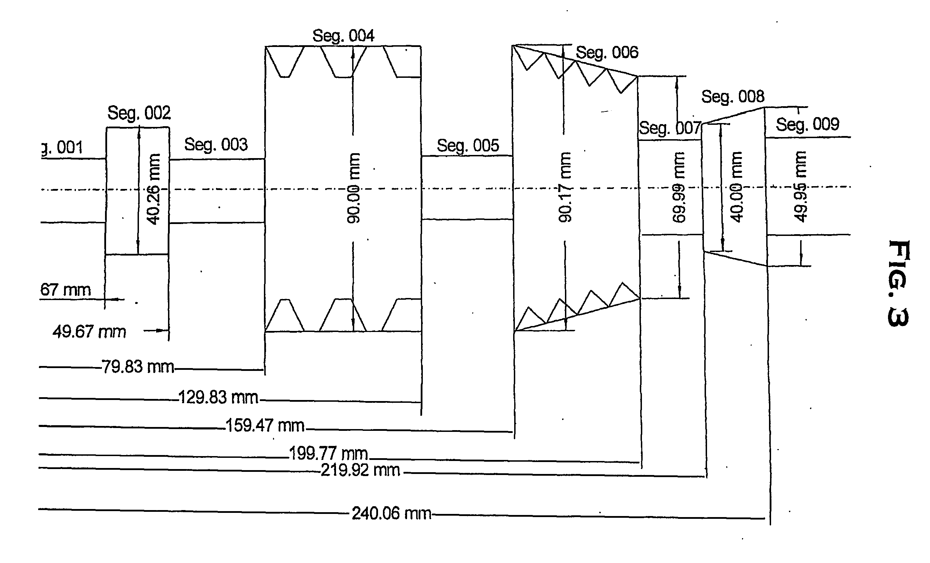

Fig. 3 zeigt ein Werkstück mit Schraubenmantelfläche zur Herstellung auf einer erfindungsgemäßen mehrachsigen Werkzeugmaschine mit 9 verschiedenen Segmenten. Unter Bezugnahme auf das in Fig. 2 veranschaulichte abstrakte Modell sollen nachfolgend die Maschinensteuerparameter entsprechend der vorliegenden Erfindung beispielhaft für das Segment 8, ein konisches Knetelement Seg. 8 angegeben werden, wobei hier die virtuelle Leitachse mit x bezeichnet wird:

**Tab. 1:** Segment 008: 2. Konisches Knetelement Prozess: Schruppen

| Leitachse: $\varkappa$ | | | $X_{Start}$ | $X_{Ende}$ | A | B | C | D | E | F | G |
|---|---|---|---|---|---|---|---|---|---|---|---|
| $\varkappa$ | [] | 008 = PB | 0 | 1 | 0 | 1 | 0 | 0 | 0 | 0 | 0 |
| η | [mm] | 008 = PB | 0 | 1 | 0 | 0 | 0 | 0 | 0 | 0 | 0 |
| y | [rad] | 008 = PB | 0 | 1 | 0 | 0 | 0 | 0 | 0 | 0 | 0 |
| ω | [m/s] | 008 = PB | 0 | 1 | 40.0 | 0 | 0 | 0 | 0 | 0 | 0 |
| τ | [rad] | 008 = PB | 0 | 1 | 0.00706 | 0.000027 | 0 | 0 | 0 | 0 | 0 |
| δ | [mm] | 008 = PB | 0 | 1 | 0.0 | 0 | 0 | 0 | 0 | 0 | 0 |
| σ | [rad] | 008 = PB | 0 | 1 | 0 | 0 | 0 | 0 | 0 | 0 | 0 |
| ζ | [mm] | 008 = PB | 0 | 1 | 0 | 0.3183 | 0 | 0 | 0 | 0 | 0 |
| β | [rad] | 008 = PB | 0 | 1 | 0 | 0.00395 | 0 | 0 | 0 | 0 | 0 |
| χ | [mm] | 008 = PB | 0 | 1 | 90.17 | -0.0797 | 0 | 0 | 0 | 0 | 0 |

Zur Erläuterung derartiger Tabelle (vorstehend in Tab.1 nicht alle Optionen verwendet), die eine Ausführungsform der funktionalen Datenstrukturen nach der vorliegenden Erfindung wiedergibt :

Spalte 1:                              Achsenbezeichnung
Spalte 2:                              Einheit
Spalte 3:                              Segmentnummer = Kennbuchstabe für die Art der Neutraldaten (und zwar C für Kreis, P für Polynom [6. Grades], K für Koordinaten [Punkte] einer Tabelle von Koordinaten) und Kennbuchstabe für welche Flanke (R für rechte Flanke; L für linke Flanke; B für beide Flanken)
Weitere Spalten:                       Wertetabelle mit $X_{Start}$ und $X_{Ende}$ als Bereichsgrenzen und den Werten für Parameter A, B, C, D, E, F und G (beim Polymotor), R, A, B, C (beim Kreis) sowie A, B, C (bei einer Tabelle von Koordinaten) zu den Relationen und/oder Funktionen nach folgender Maßgabe:
Kreis [C als Kennbuchstabe]:

$$R \;=\; \sqrt{(x-A)^2 \;+\; (y-B)^2}$$

mit dem Wert in Spalte R als Radius, C als Drehrichtung, wobei -1 die Drehrichtung im Uhrzeigersinn (clockwise, cw) und der Wert + 1 die Drehrichtung entgegen dem Uhrzeigersinn(counterclockwise; ccw) angibt

Polynom [P als Kennbuchstabe]: $Y = A + B.x + C \cdot x^2 + D \cdot x^3 + E \cdot x^4 + F \cdot x^5 + G \cdot x^6$

Koordinaten (Punkte) einer Tabelle von Koordinaten [K als Kennbuchstabe]:

Wert in Spalte A: X-Koordinate, Wert in Spalte B: Y-Koordinate, Wert in Spalte C: Normalenwinkel, immer abgespeichert im Stirnschnitt

Beispiele:

**Patentansprüche**

1. Mehrachsige Werkzeugmaschine (2) zur Herstellung von Werkstücken mit Schraubenmantelfläche, welche
eine Werkstückhalterung zur Aufnahme eines Werkstücks,
ein Werkzeug,
ansteuerbare mechanische Achsen zur Bearbeitung des Werkstücks oder zur Positionierung von Werkstück und Werkzeug in Relation zueinander, sowie
eine Steuer- und/oder Regeleinrichtung zur Ansteuerung von Achsen
aufweist, **dadurch gekennzeichnet, daß**
die Ansteuerung der jeweiligen mechanischen Achse durch die Steuer- und/oder Regeleinrichtung mittels einer frei wählbaren Funktion oder Relation erfolgt, welche vom Wert einer als Leitachse für andere Achsen parametrierbaren virtuellen Achse und auch vom Wert weiterer Parameter abhängig ist, wobei die virtuelle Achse durch die Steuer- und/oder Regeleinrichtung mittels einer von der Zeit abhängigen frei wählbaren Funktion oder Relation gebildet wird.

2. Mehrachsige Werkzeugmaschine (2) nach Anspruch 1, **dadurch gekennzeichnet, daß** die virtuelle Achse durch die Steuer- und/oder Regeleinrichtung mittels einer Polynomfunktion gebildet wird.

3. Mehrachsige Werkzeugmaschine (2) nach Anspruch 1, **dadurch gekennzeichnet, daß** die virtuelle Achse durch die Steuer- und/oder Regeleinrichtung mittels einer Kreisrelation gebildet wird.

4. Mehrachsige Werkzeugmaschine (2) nach Anspruch 1, **dadurch gekennzeichnet, daß** die virtuelle Achse durch die Steuer- und/oder Regeleinrichtung mittels einer durch eine Wertetabelle gegebenen Relation gebildet wird.

5. Mehrachsige Werkzeugmaschine (2) nach einem der Ansprüche 1 bis 4, **dadurch gekennzeichnet, daß** die Ansteuerung der jeweiligen mechanischen Achse durch die Steuer- und/oder Regeleinrichtung mittels einer Polynomfunktion erfolgt, die vom Wert einer der virtuellen Achsen und Polynomkoeffizienten abhängig ist.

6. Mehrachsige Werkzeugmaschine (2) nach einem der Ansprüche 1 bis 4, **dadurch gekennzeichnet, daß** die Ansteuerung der jeweiligen mechanischen Achse durch die Steuer- und/oder Regeleinrichtung mittels einer Kreisrelation erfolgt, die vom Wert einer der virtuellen Achsen und Kreiskonstanten, vorzugsweise einem Kreisradius und einem durch ein Koordinatenpaar gegebenen Mittelpunkt sowie einer Drehrichtung abhängig ist.

7. Mehrachsige Werkzeugmaschine (2) nach einem der Ansprüche 1 bis 4, **dadurch gekennzeichnet, daß** die Ansteuerung der jeweiligen mechanischen Achse durch die Steuer- und/oder Regeleinrichtung mittels einer frei wählbaren Relation erfolgt, die durch eine Tabelle von Koordinaten gegeben ist.

8. Mehrachsige Werkzeugmaschine (2) nach Anspruch 7, **dadurch gekennzeichnet, daß** als Koordinaten der Koordinatentabelle eine X-Koordinate, eine Y-Koordinate und ein Normalenwinkel, vorzugsweise im Stirnschnitt betrachtet, verwendet werden.

9. Mehrachsige Werkzeugmaschine (2) nach einem der Ansprüche 1 bis 8, **dadurch gekennzeichnet, daß** mindestens fünf ansteuerbare mechanische Achsen zur Positionierung von Werkstück und Werkzeug in Relation zueinander vorgesehen sind.

10. Mehrachsige Werkzeugmaschine (2) nach Anspruch 9, **dadurch gekennzeichnet, daß** als Werkzeug eine Schleifscheibe und als mechanische Achsen mindestens
    eine positionierbare Radialzustellungsachse ($\aleph$) für die Schleifscheibe,
    ein in Relation zur Radialzustellungsachse horizontal orthogonal positionierbarer Schleifschlitten ($\zeta$) zur Positionierung der Schleifscheibe in Verschieberichtung des Schleifschlittens,
    eine positionierbare Drehachse ($\beta$) eines Spannkopfes zur Drehung des Werkstücks in der Werkstückhalterung,
    eine positionierbare Schwenkachse ($\tau$) zur Verschwenkung von Werkstück und Schleifscheibe gegeneinander mittels einer Drehung der Schleifscheibenachse oder ihrer Parallelprojektion in der vertikalen Ebene (B),
    sowie eine Drehachse ($\omega$) für den Antrieb der Schleifscheibe vorgesehen sind.

11. Mehrachsige Werkzeugmaschine (2) nach Anspruch 10, **dadurch gekennzeichnet, daß** als mechanische Achse auch eine positionierbare Verschiebeachse ($\delta$) zur Kontrolle einer Vorschubposition der Schleifscheibe entlang der Schleifscheibenachse vorgesehen ist

12. Mehrachsige Werkzeugmaschine (2) nach Anspruch 10 oder 11, **dadurch gekennzeichnet, daß** als mechanische Achse auch eine Schwenkachse ($\sigma$) zur Verschwenkung von Werkstück und Schleifscheibe gegeneinander mittels einer Drehung der Schleifscheibenachse oder ihrer Parallelprojektion in der horizontalen Ebene (A) vorgesehen ist.

13. Mehrachsige Werkzeugmaschine (2) nach einem der Ansprüche 10 bis 12, **dadurch gekennzeichnet, daß** als mechanische Achse auch eine Verschiebeachse ($\eta$) zur vertikalen Verschiebung von Werkstück und Schleifscheibe gegeneinander vorgesehen ist.

14. Mehrachsige Werkzeugmaschine (2) nach einem der Ansprüche 10 bis 13, **dadurch gekennzeichnet, daß** als mechanische Achse auch eine Schwenkachse ($\gamma$) zur Verschwenkung von Werkstück und Schleifscheibe gegeneinander mittels einer Drehung der Werkstückachse oder ihrer Parallelprojektion in der horizontalen Ebene (A) vorgesehen ist.

15. Mehrachsige Werkzeugmaschine (2) nach einem der Ansprüche 1 bis 14, **dadurch gekennzeichnet, daß** auch ein Speicher vorgesehen ist, in dem Maschinensteuerparameter gespeichert sind, auf die seitens der Steuer- und/oder Regeleinrichtung zugegriffen wird.

16. Mehrachsige Werkzeugmaschine (2) nach Anspruch 15, **dadurch gekennzeichnet, daß** in dem Speicher, in dem Maschinensteuerparameter gespeichert sind, auf die seitens der Steuer- und/oder Regeleinrichtung zugegriffen wird, eine Datenstruktur vorliegt, die die Parametrierung einer virtuellen Achse als Leitachse für andere Achsen erlaubt.

17. Mehrachsige Werkzeugmaschine (2) nach Anspruch 16, **dadurch gekennzeichnet, daß** in dem Speicher, in dem Maschinensteuerparameter gespeichert sind, auf die seitens der Steuer- und/oder Regeleinrichtung zugegriffen wird, eine Datenstruktur vorliegt, die auch die Parametrierung irgendeiner mechanischen Achse als Leitachse für andere Achsen erlaubt.

**18.** Mehrachsige Werkzeugmaschine (2) nach einem der Ansprüche 15 bis 17, **dadurch gekennzeichnet, daß** in dem Speicher, in dem Maschinensteuerparameter gespeichert sind, auf die seitens der Steuer- und/oder Regeleinrichtung zugegriffen wird, eine Datenstruktur vorliegt, die zur Aufnahme einer Funktions- oder Relationsdefinition für die Bildung der virtuellen Achse durch die Steuer- und/oder Regeleinrichtung vorgesehen ist.

**19.** Mehrachsige Werkzeugmaschine (2) nach einem der Ansprüche 15 bis 18, **dadurch gekennzeichnet, daß** in dem Speicher, in dem Maschinensteuerparameter gespeichert sind, auf die seitens der Steuer- und/oder Regeleinrichtung zugegriffen wird, eine Datenstruktur vorliegt, die zur Aufnahme einer Funktions- oder Relationsdefinition für die Ansteuerung der jeweiligen mechanischen Achse durch die Steuer- und/oder Regeleinrichtung vorgesehen ist.

**20.** Mehrachsige Werkzeugmaschine (2) nach Anspruch 19, **dadurch gekennzeichnet, daß** zumindest eine vordefinierte Funktions- oder Relationstype vorgesehen ist und die Datenstruktur zumindest ein Datenfeld zur Identifikation des vordefinierten Fünktions- oder Relationstyps aufweist, welcher für die Funktions- oder Relationsdefinition der jeweiligen mechanischen Achse verwendet wird.

**21.** Mehrachsige Werkzeugmaschine (2) nach Anspruch 20, **dadurch gekennzeichnet, daß** als Funktionstyp eine Polynomfunktion, vorzugsweise sechsten Grades, mit Polynomkoeffizienten als Parametern vordefiniert ist.

**22.** Mehrachsige Werkzeugmaschine (2) nach Anspruch 20 oder 21, **dadurch gekennzeichnet, daß** als Relationstyp eine Kreisrelation mit Kreisradius und einem durch ein Koordinatenpaar gegebenen Mittelpunkt sowie einer Drehrichtung als Parametern vordefiniert ist.

**23.** Mehrachsige Werkzeugmaschine (2) nach einem der Ansprüche 20 bis 22, **dadurch gekennzeichnet, daß** als Relationstyp eine Koordinatentabelle mit Koordinaten als Parametern vordefiniert ist.

**24.** Mehrachsige Werkzeugmaschine (2) nach Anspruch 23, **dadurch gekennzeichnet, daß** als Koordinaten jeweils eine X-Koordinate, eine Y-Koordinate und ein Normalenwinkel, vorzugsweise im Stirnschnitt betrachtet, verwendet werden.

**25.** Mehrachsige Werkzeugmaschine (2) nach einem der Ansprüche 15 bis 24, **dadurch gekennzeichnet, daß** in dem Speicher, in dem Maschinensteuerparameter gespeichert sind, auf die seitens der Steuer- und/oder Regeleinrichtung zugegriffen wird, eine Datenstruktur vorliegt, die zur Aufnahme einer Kennzeichnung der durch die Ansteuerung der jeweiligen mechanischen Achse durch die Steuer- und/oder Regeleinrichtung bearbeiteten Werkstückflanke, vorzugsweise einer Kennzeichnung für eine rechte oder eine linke Flanke, vorgesehen ist.

**26.** Mehrachsige Werkzeugmaschine (2) nach einem der Ansprüche 15 bis 25, **dadurch gekennzeichnet, daß** in dem Speicher, in dem Maschinensteuerparameter gespeichert sind, auf die seitens der Steuer- und/oder Regeleinrichtung zugegriffen wird, eine Datenstruktur vorliegt, die zumindest eine Gruppe von Maschinensteuerparametern, die einem Teilbereich des Werkstücks entspricht, als Segment unter einer gemeinsamen Segmentidentifikation, vorzugsweise einer Segmentnummer, zusammenfaßt.

**27.** Mehrachsige Werkzeugmaschine (2) nach Anspruch 26, **dadurch gekennzeichnet, daß** immer eine solche Gruppe von Maschinensteuerparametern als Segment zusammengefaßt sind, bei denen die gleiche Achse als Leitachse parametriert ist.

**28.** Verfahren zur Ansteuerung einer mehrachsigen Werkzeugmaschine (2) nach einem der Ansprüche 1 bis 27, wobei zunächst eine virtuelle Achse als Leitachse für andere Achsen parametriert wird,
und sodann während des Betriebs der Maschine zur Bearbeitung des Werkstücks
die jeweiligen mechanischen Achsen durch die Steuer- und/oder Regeleinrichtung mittels einer frei wählbaren Funktion oder Relation angesteuert werden, welche vom Wert der als Leitachse für andere Achsen parametrierten, durch die Steuer- und/oder Regeleinrichtung mittels einer von der Zeit abhängigen frei wählbaren Funktion oder Relation gebildeten, virtuellen Achse und auch vom Wert weiterer Parameter abhängig ist.

**29.** Datenträger oder elektronisches Trägersignal (3) mit Maschinensteuerparametern zum Einlesen in eine mehrachsige Werkzeugmaschine (2) nach einem der Ansprüche 1 bis 27, **dadurch gekennzeichnet, daß**
auf dem Datenträger oder dem elektronischen Trägersignal
zumindest eine Datenstruktur vorliegt, die ein Datenfeld aufweist, das die Parametrierung einer virtuellen Achse als Leitachse für andere Achsen erlaubt
und zumindest eine Datenstruktur vorliegt, die zur Aufnahme einer Funktions- oder Relationsdefinition für die Bildung der virtuellen Achse durch die Steuer- und/oder Regeleinrichtung vorgesehen ist
und zumindest eine Datenstruktur vorliegt, die zur Aufnahme einer Funktions- oder Relationsdefinition für die Ansteuerung der jeweiligen mechanischen Achse durch die Steuer- und/oder Regeleinrichtung vorgesehen ist, und der Datenträger oder das elektronisches Trägersignal (3) die Werkzeugmaschine (2) beim Einlesen oder nach dem Einlesen mittels dieser Datenstruktur nach dem Verfahren nach Anspruch 28 ansteuert.

30. Datenträger oder elektronisches Trägersignal (3) mit Maschinensteuerparametern nach Anspruch 29 zum Einlesen in eine mehrachsige Werkzeugmaschine (2) nach einem der Ansprüche 1 bis 27, **dadurch gekennzeichnet, daß** die Datenstruktur zumindest ein Datenfeld zur Identifikation zumindest einer vordefinierten Funktions- oder Relationstype, vorzugsweise eines Polynomfunktionstyps, eines Kreisrelationstyps oder eines Koordinatentabellentyps aufweist, welche für die Funktions- oder Relationsdefinition der jeweiligen mechanischen Achse verwendet wird.

31. Datenträger oder elektronisches Trägersignal (3) mit Maschinensteuerparametern nach einem der Ansprüche 29 oder 30 zum Einlesen in eine mehrachsige Werkzeugmaschine (2) nach einem der Ansprüche 1 bis 27, **dadurch gekennzeichnet, daß** auf dem Datenträger oder dem elektronischen Trägersignal zumindest eine Datenstruktur vorliegt, die zur Aufnahme einer Kennzeichnung der durch die Ansteuerung der jeweiligen mechanischen Achse durch die Steuer- und/oder Regeleinrichtung bearbeiteten Werkstückflanke, vorzugsweise einer Kennzeichnung für eine rechte oder eine linke Flanke, vorgesehen ist.

32. Datenträger oder elektronisches Trägersignal (3) mit Maschinensteuerparametem nach einem der Ansprüche 29 bis 31 zum Einlesen in eine mehrachsige Werkzeugmaschine (2) nach einem der Ansprüche 1 bis 27, **dadurch gekennzeichnet, daß** auf dem Datenträger oder dem elektronischen Trägersignal zumindest eine Datenstruktur vorliegt, die zumindest eine Gruppe von Maschinensteuerparamtern, die einem Teilbereich des Werkstücks entspricht, als Segment unter einer gemeinsamen Segmentidentifikation, vorzugsweise einer Segmentnummer, zusammenfaßt.

33. Datenträger oder elektronisches Trägersignal (3) mit Maschinensteuerparametern nach Anspruch 32 zum Einlesen in eine mehrachsige Werkzeugmaschine (2) nach einem der Ansprüche 1 bis 27, **dadurch gekennzeichnet, daß** immer solche Gruppen von Maschinensteuerparamtern als Segment zusammengefaßt sind, bei denen die gleiche Achse als Leitachse parametriert ist.

34. Datenträger oder elektronisches Trägersignal (3) mit Maschinensteuerparametern nach einem der Ansprüche 29 bis 33 zum Einlesen in eine mehrachsige Werkzeugmaschine (2) nach einem der Ansprüche Ansprüche 1 bis 27, **dadurch gekennzeichnet, daß** auf dem Datenträger oder dem elektronischen Trägersignal zumindest eine Datenstruktur vorliegt, die auch die Parametrierung irgendeiner mechanischen Achse als Leitachse für andere Achsen erlaubt.

35. Mehrachsige Werkzeugmaschine (2) nach einem der Ansprüche 1 bis 27, **dadurch gekennzeichnet, daß** sie ferner Mittel zum Einlesen von Maschinensteuerparametern für die Steuer- und/oder Regeleinrichtung von einem Datenträger oder elektronischen Trägersignal (3) nach einem der Ansprüche 29 bis 34 in den Speicher aufweist.

36. Verfahren zur Erzeugung von Maschinensteuerparametem für eine mehrachsige Werkzeugmaschine nach einem der Ansprüche 1 bis 27 sowie 35 , **dadurch gekennzeichnet, daß** zumindest ein Datenträger oder ein elektronisches Trägersignal (3) mit Maschinensteuerparametern nach einem der Ansprüche 29 bis 34 erzeugt wird.

37. Computersystem (1) zur Erzeugung von Maschinensteuerparametem für mehrachsige Werkzeugmaschine (2) nach einem der Ansprüche 1 bis 27 sowie 35 mit mindestens einer Datenverarbeitungseinheit und mindestens einem Speicher, **dadurch gekennzeichnet, daß** die Datenverarbeitungseinheit programmtechnisch so eingerichtet ist, daß sie zumindest einen Datenträger oder ein elektronisches Trägersignal (3) mit Maschinensteuerparametern nach einem der Ansprüche 29 bis 34 erzeugt.

38. Computerprogramm mit Programmcode-Mitteln zur Durchführung des Verfahrens nach Anspruch 36, wenn das Programm auf einem Computer ausgeführt wird.

**Claims**

1. Multiaxis machine tool (2) for producing workpieces having a helicoidal generated surface, which has
a workpiece holder for receiving a workpiece,
a tool,
activatable mechanical axes for machining the workpiece or for positioning the workpiece and the tool in relation to each other, and also
an open-loop and/or closed-loop control device for activating axes,
**characterized in that**
the activation of the respective mechanical axis by the open-loop and/or closed-loop control device takes place by means of a freely selectable function or relation which is dependent on the value of a virtual axis, which can be parameterized as a guiding axis for other axes and is also dependent on the value of further parameters, the virtual axis being formed by the open-loop and/or closed-loop control device by means of a freely selectable function or relation dependent on time.

2. Multiaxis machine tool (2) according to Claim 1, **characterized in that** the virtual axis is formed by the open-loop and/or closed-loop control device by means of a polynomial function.

3. Multiaxis machine tool (2) according to Claim 1, **characterized in that** the virtual axis is formed by the open-loop and/or closed-loop control device by means of a circular relation.

4. Multiaxis machine tool (2) according to Claim 1, **characterized in that** the virtual axis is formed by the open-loop and/or closed-loop control device by means of a relation given by a table of values.

5. Multiaxis machine tool (2) according to one of Claims 1 to 4, **characterized in that** the activation of the respective mechanical axis by the open-loop and/or closed-loop control device takes place by means of a polynomial function which is dependent on the value of one of the virtual axes and polynomial coefficients.

6. Multiaxis machine tool (2) according to one of Claims 1 to 4, **characterized in that** the activation of the respective mechanical axis by the open-loop and/or closed-loop control device takes place by means of a circular relation which is dependent on the value of one of the virtual axes and circle constants, preferably a circle radius and a centre point, given by a pair of coordinates, and a direction of rotation.

7. Multiaxis machine tool (2) according to one of Claims 1 to 4, **characterized in that** the activation of the respective mechanical axis by the open-loop and/or closed-loop control device takes place by means of a freely selectable relation which is given by a table of coordinates.

8. Multiaxis machine tool (2) according to Claim 7, **characterized in that** an X coordinate, a Y coordinate and a normal angle, preferably as viewed in end-on section, are used as coordinates of the table of coordinates.

9. Multiaxis machine tool (2) according to one of Claims 1 to 8, **characterized in that** at least five activatable mechanical axes are provided for the positioning of the workpiece and the tool in relation to each other.

10. Multiaxis machine tool (2) according to Claim 9, **characterized in that** a grinding wheel is provided as the tool and, as mechanical axes, at least one
positionable radial infeed axis ($\chi$) is provided for the grinding wheel,
a grinding slide ($\zeta$) which can be positioned horizontally and orthogonally in relation to the radial infeed axis is provided for the positioning of the grinding wheel in the direction of displacement of the grinding slide,
a positionable rotating axis ($\beta$) of a clamping head is provided for the rotation of the workpiece in the workpiece holder,
a positionable pivoting axis ($\tau$) is provided for the pivoting of the workpiece and the grinding wheel with respect to each other by means of a rotation of the grinding wheel axis or its parallel projection in the vertical plane (B),
and a rotating axis ($\omega$) is provided for the driving of the grinding wheel.

11. Multiaxis machine tool (2) according to Claim 10, **characterized in that** a positionable displacing axis ($\delta$) for the monitoring of a displacing position of the grinding wheel along the grinding wheel axis is also provided as a mechanical axis.

**12.** Multiaxis machine tool (2) according to Claim 10 or 11, **characterized in that** a pivoting axis ($\sigma$) for the pivoting of the workpiece and the grinding wheel with respect to each other by means of a rotation of the grinding wheel axis or its parallel projection in the horizontal plane (A) is also provided as a mechanical axis.

**13.** Multiaxis machine tool (2) according to one of Claims 10 to 12, **characterized in that** a displacing axis ($\eta$) for the vertical displacement of the workpiece and the grinding wheel with respect to each other is also provided as a mechanical axis.

**14.** Multiaxis machine tool (2) according to one of Claims 10 to 13, **characterized in that** a pivoting axis ($\gamma$) for the pivoting of the workpiece and the grinding wheel with respect to each other by means of a rotation of the workpiece axis or its parallel projection in the horizontal plane (A) is also provided as a mechanical axis.

**15.** Multiaxis machine tool (2) according to one of Claims 1 to 14, **characterized in that** a memory is also provided, stored in which are machine control parameters which are accessed by the open-loop and/or closed-loop control device.

**16.** Multiaxis machine tool (2) according to Claim 15, **characterized in that** in the memory in which machine control parameters accessed by the open-loop and/or closed-loop control device are stored there is a data structure which allows the parameterization of a virtual axis as a guiding axis for other axes.

**17.** Multiaxis machine tool (2) according to Claim 16, **characterized in that** in the memory in which machine control parameters accessed by the open-loop and/or closed-loop control device are stored there is a data structure which also allows the parameterization of any mechanical axis as a guiding axis for other axes.

**18.** Multiaxis machine tool (2) according to one of Claims 15 to 17, **characterized in that** in the memory in which machine control parameters accessed by the open-loop and/or closed-loop control device are stored there is a data structure which is intended for receiving a definition of the function or relation for the formation of the virtual axis by the open-loop and/or closed-loop control device.

**19.** Multiaxis machine tool (2) according to one of Claims 15 to 18, **characterized in that** in the memory in which machine control parameters accessed by the open-loop and/or closed-loop control device are stored there is a data structure which is intended for receiving a definition of the function or relation for the activation of the respective mechanical axis by the open-loop and/or closed-loop control device.

**20.** Multiaxis machine tool (2) according to Claim 19, **characterized in that** at least one predefined type of function or relation is provided and the data structure has at least one data field for the identification of the predefined type of function or relation, used for the definition of a function or relation of the respective mechanical axis.

**21.** Multiaxis machine tool (2) according to Claim 20, **characterized in that** a polynomial function, preferably of the sixth degree, with polynomial coefficients as parameters is predefined as a type of function.

**22.** Multiaxis machine tool (2) according to Claim 20 or 21, **characterized in that** a circular relation with a circle radius and a centre point, given by a pair of coordinates, and a rotating direction as parameters is predefined as a type of relation.

**23.** Multiaxis machine tool (2) according to one of Claims 20 to 22, **characterized in that** a table of coordinates with coordinates as parameters is predefined as a type of relation.

**24.** Multiaxis machine tool (2) according to Claim 23, **characterized in that** an X coordinate, a Y coordinate and a normal angle, preferably as viewed in end-on section, are used in each case as coordinates.

**25.** Multiaxis machine tool (2) according to one of Claims 15 to 24, **characterized in that** in the memory in which machine control parameters accessed by the open-loop and/or closed-loop control device are stored there is a data structure which is intended for receiving an identification of the workpiece flank being machined by the activation of the respective mechanical axis by the open-loop and/or closed-loop control device, preferably an identification for a flank on the right or on the left.

26. Multiaxis machine tool (2) according to one of Claims 15 to 25, **characterized in that** in the memory in which machine control parameters accessed by the open-loop and/or closed-loop control device are stored there is a data structure which combines at least one group of machine control parameters corresponding to a partial region of the workpiece, as a segment under a common segment identification, preferably a segment number.

27. Multiaxis machine tool (2) according to Claim 26, **characterized in that** such a group of machine control parameters for which the same axis is parameterized as the guiding axis are always combined as a segment.

28. Method of activating a multiaxis machine tool (2) according to one of Claims 1 to 27,
a virtual axis initially being parameterized as a guiding axis for other axes,
and then, during the operation of the machine for machining the workpiece,
the respective mechanical axes being activated by the open-loop and/or closed-loop control device by means of a freely selectable function or relation which is dependent on the value of the virtual axis, which is parameterized as a guiding axis for other axes and is formed by the open-loop and/or closed-loop control device by means of a freely selectable function or relation dependent on time, and also is dependent on the value of further parameters.

29. Data carrier or electronic carrier signal (3) with machine control parameters for reading into a multiaxis machine tool (2) according to one of Claims 1 to 27, **characterized in that**
on the data carrier or the electronic carrier signal
there is at least one data structure which has a data field which allows the parameterization of a virtual axis as a guiding axis for other axes,
and there is at least one data structure which is intended for receiving a definition of a function or relation for the formation of the virtual axis by the open-loop and/or closed-loop control device
and there is at least one data structure which is intended for receiving a definition of a function or relation for the activation of the respective mechanical axis by the open-loop and/or closed-loop control device, and
the data carrier or the electronic carrier signal (3) activates the machine tool (2) during the reading-in or after the reading-in by means of this data structure on the basis of the method according to Claim 28.

30. Data carrier or electronic carrier signal (3) with machine control parameters according to Claim 29 for reading into a multiaxis machine tool (2) according to one of Claims 1 to 27, **characterized in that** the data structure has at least one data field for the identification of at least one predefined type of function or relation, preferably a type of polynomial function, a type of circular relation or a type of table of coordinates, which is used for the definition of the function or relation of the respective mechanical axis.

31. Data carrier or electronic carrier signal (3) with machine control parameters according to one of Claims 29 or 30 for reading into a multiaxis machine tool (2) according to one of Claims 1 to 27, **characterized in that** on the data carrier or the electronic carrier signal there is at least one data structure which is intended for receiving an identification of the workpiece flank being machined by the activation of the respective mechanical axis by the open-loop and/or closed-loop control device, preferably an identification for a flank on the right or on the left.

32. Data carrier or electronic carrier signal (3) with machine control parameters according to one of Claims 29 to 31 for reading into a multiaxis machine tool (2) according to one of Claims 1 to 27, **characterized in that** on the data carrier or the electronic carrier signal there is at least one data structure which combines at least one group of machine control parameters corresponding to a partial region of the workpiece, as a segment under a common segment identification, preferably a segment number.

33. Data carrier or electronic carrier signal (3) with machine control parameters according to Claim 32 for reading into a multiaxis machine tool (2) according to one of Claims 1 to 27, **characterized in that** such a group of machine control parameters for which the same axis is parameterized as the guiding axis are always combined as a segment.

34. Data carrier or electronic carrier signal (3) with machine control parameters according to one of Claims 29 to 33 for reading into a multiaxis machine tool (2) according to one of Claims 1 to 27, **characterized in that** on the data carrier or the electronic carrier signal there is at least one data structure which also allows the parameterization of a mechanical axis as a guiding axis for other axes.

35. Multiaxis machine tool (2) according to one of Claims 1 to 27, **characterized in that** it also has means for reading machine control parameters for the open-loop and/or closed-loop control device from a data carrier or electronic carrier signal (3) according to one of Claims 29 to 34 into the memory.

**36.** Method of generating machine control parameters for a multiaxis machine tool according to one of Claims 1 to 27 and 35, **characterized in that**
at least one data carrier or an electronic carrier signal (3) with machine control parameters according to one of Claims 29 to 34 is generated.

**37.** Computer system (1) for generating machine control parameters for a multiaxis machine tool (2) according to one of Claims 1 to 27 and 35 with at least one data processing unit and at least one memory, **characterized in that** the data processing unit is set up in programming terms in such a way that it generates at least one data carrier or an electronic carrier signal (3) with machine control parameters according to one of Claims 29 to 34.

**38.** Computer program having program coding means for carrying out the method according to Claim 36, when the program is executed on a computer.

**Revendications**

**1.** Machine-outil (2) à plusieurs axes pour la fabrication de pièces dotées d'une surface d'enveloppe filetée, qui présente
un porte-pièce qui sert à reprendre une pièce,
un outil,
des axes mécaniques asservis destinés à l'usinage de la pièce ou au positionnement mutuel de la pièce et de l'outil, ainsi que
un dispositif de commande et/ou de régulation pour la commande des axes,
**caractérisée en ce que**
la commande de chaque axe mécanique par le dispositif de commande et/ou de régulation s'effectue au moyen d'une fonction ou relation sélectionnée librement, qui dépend de la valeur d'un axe virtuel paramétrable en tant qu'axe de référence pour les autres axes et également de la valeur d'autres paramètres, l'axe virtuel étant formé par le dispositif de commande et/ou de régulation au moyen d'une fonction ou relation qui dépend du temps et qui peut être sélectionnée librement.

**2.** Machine-outil (2) à plusieurs axes selon la revendication 1, **caractérisée en ce que** l'axe virtuel est formé par le dispositif de commande et/ou de régulation au moyen d'une fonction polynomiale.

**3.** Machine-outil (2) à plusieurs axes selon la revendication 1, **caractérisée en ce que** l'axe virtuel est formé par le dispositif de commande et/ou de régulation au moyen d'une relation circulaire.

**4.** Machine-outil (2) à plusieurs axes selon la revendication 1, **caractérisée en ce que** l'axe virtuel est formé par le dispositif de commande et/ou de régulation au moyen d'une relation donnée par un tableau de valeurs.

**5.** Machine-outil (2) à plusieurs axes selon l'une des revendications 1 à 4, **caractérisée en ce que** la commande de chaque axe mécanique par le dispositif de commande et/ou de régulation s'effectue au moyen d'une fonction polynomiale qui dépend de la valeur de l'un des axes virtuels et des coefficients du polynôme.

**6.** Machine-outil (2) à plusieurs axes selon l'une des revendications 1 à 4, **caractérisée en ce que** la commande de chaque axe mécanique par le dispositif de commande et/ou de régulation s'effectue au moyen d'une relation circulaire qui dépend de la valeur d'un des axes virtuels et de constantes d'un cercle, de préférence le rayon du cercle, son centre donné par une paire de coordonnées ou un sens de rotation.

**7.** Machine-outil (2) à plusieurs axes selon l'une des revendications 1 à 4, **caractérisée en ce que** la commande de chaque axe mécanique par le dispositif de commande et/ou de régulation s'effectue au moyen d'une relation sélectionnée librement qui est fournie par un tableau de coordonnées.

**8.** Machine-outil (2) à plusieurs axes selon la revendication 7, **caractérisée en ce que** l'on utilise comme coordonnées du tableau de coordonnées une coordonnée X, une coordonnée Y et un angle normal, de préférence vus en coupe frontale.

**9.** Machine-outil (2) à plusieurs axes selon l'une des revendications 1 à 8, **caractérisée en ce qu'**au moins cinq axes mécaniques asservis sont prévus pour le positionnement mutuel entre la pièce et l'outil.

**10.** Machine-outil (2) à plusieurs axes selon la revendication 9, **caractérisée en ce que** l'on utilise comme outil un disque de meulage et comme axes mécaniques au moins :

un axe positionnable d'orientation radiale ($\chi$) pour le disque de meulage,
un chariot de meulage ($\zeta$) qui peut être positionné à l'horizontale et perpendiculairement à l'axe d'orientation radiale pour le positionnement du disque de meulage dans la direction de déplacement du chariot de meulage,
un axe positionnable de rotation ($\beta$) d'une tête de serrage qui permet de faire tourner la pièce dans le porte-pièce,
un axe positionnable de pivotement ($\tau$) pour l'inclinaison mutuelle de la pièce et du disque de meulage au moyen d'une rotation de l'axe du disque de meulage ou de sa projection parallèle dans le plan vertical (B) ainsi que
un axe de rotation ($\omega$) pour l'entraînement du disque de meulage.

**11.** Machine-outil (2) à plusieurs axes selon la revendication 10, **caractérisée en ce qu'**elle prévoit également comme axe mécanique un axe positionnable de déplacement ($\delta$) pour le contrôle de la position d'avancement du disque de meulage le long de l'axe du disque de meulage.

**12.** Machine-outil (2) à plusieurs axes selon les revendications 10 ou 11, **caractérisée en ce qu'**elle prévoit également comme axe mécanique un axe de pivotement ($\sigma$) pour l'inclinaison mutuelle entre la pièce et le disque de meulage au moyen d'une rotation de l'axe du disque de meulage ou de sa projection parallèle dans le plan horizontal (A).

**13.** Machine-outil (2) à plusieurs axes selon l'une des revendications 10 à 12, **caractérisée en ce qu'**elle prévoit également comme axe mécanique un axe de déplacement ($\eta$) pour le déplacement vertical mutuel entre la pièce et le disque de meulage.

**14.** Machine-outil (2) à plusieurs axes selon l'une des revendications 10 à 13, **caractérisée en ce qu'**elle prévoit également comme axe mécanique un axe de pivotement ($\gamma$) pour l'inclinaison mutuelle entre la pièce et le disque de meulage au moyen d'une rotation de l'axe de la pièce ou de sa projection parallèle dans le plan horizontal (A).

**15.** Machine-outil (2) à plusieurs axes selon l'une des revendications 1 à 14, **caractérisée en ce qu'**elle prévoit également une mémoire dans laquelle sont conservés des paramètres de commande de la machine auxquels le dispositif de commande et/ou de régulation peut accéder.

**16.** Machine-outil (2) à plusieurs axes selon la revendication 15, **caractérisée en ce qu'**une structure de données qui permet de paramétrer un axe virtuel comme axe de référence pour d'autres axes est prévue dans la mémoire dans laquelle sont conservés les paramètres de commande de la machine auxquels le dispositif de commande et/ou de régulation peut accéder.

**17.** Machine-outil (2) à plusieurs axes selon la revendication 16, **caractérisée en ce qu'**une structure de données qui permet également de paramétrer des axes mécaniques quelconques comme axes de référence pour d'autres axes est conservée dans la mémoire dans laquelle sont conservés les paramètres de commande de la machine auxquels le dispositif de commande et/ou de régulation peut accéder.

**18.** Machine-outil (2) à plusieurs axes selon l'une des revendications 15 à 17, **caractérisée en ce qu'**une structure de données qui est prévue pour reprendre une définition de fonction ou de relation en vue de la formation de l'axe virtuel par le dispositif de commande et/ou de régulation est prévue dans la mémoire dans laquelle sont conservés les paramètres de commande de la machine auxquels le dispositif de commande et/ou de régulation peut accéder.

**19.** Machine-outil (2) à plusieurs axes selon l'une des revendications 15 à 18, **caractérisée en ce qu'**une structure de données qui est prévue pour reprendre la définition d'une fonction ou d'une relation pour la commande des différents axes mécaniques par le dispositif de commande et/ou de régulation est prévue dans la mémoire dans laquelle sont conservés les paramètres de commande de la machine auxquels le dispositif de commande et/ou de régulation peut accéder.

**20.** Machine-outil (2) à plusieurs axes selon la revendication 19, **caractérisée en ce qu'**elle prévoit au moins un type prédéfini de fonction ou de relation et **en ce que** la structure de données présente au moins un champ de données d'identification du type prédéfini de fonction ou de relation qui est utilisé pour la définition de la fonction de la relation de chaque axe mécanique.

**21.** Machine-outil (2) à plusieurs axes selon la revendication 20, **caractérisée en ce que** comme type de fonction, elle prédéfinit une fonction polynomiale, de préférence du sixième degré, dont les paramètres sont les coefficients du polynôme.

**22.** Machine-outil (2) à plusieurs axes selon les revendications 20 ou 21, **caractérisée en ce que** comme type de relation, elle prédéfinit une relation circulaire avec comme paramètres le rayon du cercle, le centre donné par une paire de coordonnées et un sens de rotation.

**23.** Machine-outil (2) à plusieurs axes selon l'une des revendications 20 à 22, **caractérisée en ce qu'**elle prédéfinit comme type de relation un tableau de coordonnées dont les paramètres sont des coordonnées.

**24.** Machine-outil (2) à plusieurs axes selon la revendication 23, **caractérisée en ce qu'**elle utilise comme coordonnées une coordonnée X, une coordonnée Y et un angle normal, de préférence vus en coupe frontale.

**25.** Machine-outil (2) à plusieurs axes selon l'une des revendications 15 à 24, **caractérisée en ce qu'**une structure de données qui reprend une caractéristique du flanc de la pièce usinée par la commande de l'axe mécanique concerné par le dispositif de commande et/ou de régulation et de préférence une caractéristique d'un flanc droit ou d'un flanc gauche est prévue dans la mémoire dans laquelle sont conservés les paramètres de commande de la machine auxquels le dispositif de commande et/ou de régulation peut accéder.

**26.** Machine-outil (2) à plusieurs axes selon l'une des revendications 15 à 24, **caractérisée en ce qu'**une structure de données qui rassemble au moins un groupe de paramètres de commande de machine qui correspond à une partie de la pièce, sous la forme d'un segment doté d'une identification commune de segment et de préférence d'un numéro de segment est prévue dans la mémoire dans laquelle sont conservés les paramètres de commande de la machine auxquels le dispositif de commande et/ou de régulation peut accéder.

**27.** Machine-outil (2) à plusieurs axes selon la revendication 26, **caractérisée en ce que** dans un segment sont rassemblés toujours un groupe de paramètres de commande de machine qui paramètre le même axe comme axe de référence.

**28.** Procédé de commande d'une machine-outil (2) à plusieurs axes selon l'une des revendications 1 à 27, dans lequel :

   un axe virtuel est d'abord paramétré comme axe de référence pour d'autres axes,
   et ensuite, pendant que la machine fonctionne pour usiner la pièce,
   les différents axes mécaniques sont commandés par le dispositif de commande et/ou de régulation au moyen d'une fonction ou relation sélectionnée librement qui dépend de la valeur de l'axe virtuel paramétré comme axe de référence pour d'autres axes, et formé par le dispositif de commande et/ou de régulation au moyen d'une fonction ou relation sélectionnée librement et dépendant du temps, et également de la valeur d'autres paramètres.

**29.** Support de données ou signal électronique de support (3) qui contiennent des paramètres de commande de machine destinés à être lus dans une machine-outil (2) à plusieurs axes selon l'une des revendications 1 à 27, **caractérisé en ce que**
sur le support de données ou sur le signal électronique de support sont prévus :

   au moins une structure de données qui présente un champ de données qui permet la paramétrisation d'un axe virtuel comme axe de référence pour d'autres axes,
   au moins une structure de données qui est prévue pour reprendre la définition d'une fonction ou relation en vue de la formation de l'axe virtuel par le dispositif de commande et/ou de régulation et
   au moins une structure de données qui est prévue pour reprendre la définition d'une fonction ou d'une relation pour la commande de chaque axe mécanique par le dispositif de commande et/ou de régulation et

   **en ce que** le support de données ou le signal électronique de support (3) commandent la machine-outil (2) lors de la lecture ou après la lecture au moyen de cette structure de données, par le procédé selon la revendication 28.

**30.** Support de données ou signal électronique de support (3) qui contiennent des paramètres de commande de machine selon la revendication 29, destinés à être lus dans une machine-outil (2) à plusieurs axes selon l'une des revendications 1 à 27, **caractérisés en ce que** la structure de données présente au moins un champ de données destiné à l'identification d'au moins un type prédéfini de fonction ou de relation, de préférence un type de fonction polynomiale, un type de relation circulaire ou un type de tableau de coordonnées qui sont utilisés pour la définition de la fonction ou de la relation de chaque axe mécanique.

31. Support de données ou signal électronique de support (3) qui contiennent des paramètres de commande de machine selon l'une des revendications 29 ou 30 destinés à être lus dans une machine-outil (2) à plusieurs axes selon l'une des revendications 1 à 27, **caractérisés en ce qu'**au moins une structure de données prévue pour reprendre une caractéristique du flanc de la pièce usinée par la commande de chaque axe mécanique par le dispositif de commande et/ou de régulation, de préférence une caractéristique d'un flanc droit ou d'un flanc gauche, est prévue sur le support de données ou sur le signal électronique de support.

32. Support de données ou signal électronique de support (3) qui contiennent des paramètres de commande de machine selon l'une des revendications 29 à 31 destinés à être lus dans une machine-outil (2) à plusieurs axes selon l'une des revendications 1 à 27, **caractérisés en ce qu'**au moins une structure de données qui rassemble au moins un groupe de paramètres de commande de machine qui correspond à une partie de la pièce, comme segment sous une identification commune de segment, de préférence un numéro de segment, est prévue sur le support de données ou dans le signal électronique de support.

33. Support de données ou signal électronique de support (3) qui contiennent des paramètres de commande de machine selon la revendication 32 destinés à être lus dans une machine-outil (2) à plusieurs axes selon l'une des revendications 1 à 27, **caractérisés en ce que** les mêmes groupes de paramètres de commande de machine sont toujours rassemblés en tant que segment dans lequel le même axe est paramétré comme axe de référence.

34. Support de données ou signal électronique de support (3) qui contiennent des paramètres de commande de machine selon l'une des revendications 29 à 33 destinés à être lus dans une machine-outil (2) à plusieurs axes selon l'une des revendications 1 à 27, **caractérisés en ce qu'**au moins une structure de données qui permet également de paramétrer des axes mécaniques quelconques comme axe de référence pour d'autres axes est prévue sur le support de données ou sur le signal électronique de données.

35. Machine-outil (2) à plusieurs axes selon l'une des revendications 1 à 27, **caractérisée en ce qu'**elle présente en outre des moyens pour lire dans la mémoire des paramètres de commande de machine pour le dispositif de commande et/ou de régulation qui proviennent d'un support de données ou d'un signal électronique de support (3) selon l'une des revendications 29 à 34.

36. Procédé de formation de paramètres de commande de machine pour une machine-outil à plusieurs axes selon l'une des revendications 1 à 27 et 35, **caractérisé en ce qu'**il forme au moins un support de données ou un signal électronique de support (3) qui contiennent des paramètres de commande de machine selon l'une des revendications 29 à 34.

37. Système informatique (1) destiné à former des paramètres de commande de machine pour une machine-outil (2) à plusieurs axes selon l'une des revendications 1 à 27 et 35, qui présente au moins une unité de traitement de données et au moins une mémoire, **caractérisé en ce que** l'unité de traitement de données est programmée de manière à former au moins un support de données ou un signal électronique de données (3) qui contiennent des paramètres de commande de machine selon l'une des revendications 29 à 34.

38. Programme informatique qui présente des moyens de codage de programme en vue de mettre en oeuvre le procédé selon la revendication 36 lorsque le programme est exécuté sur un ordinateur.

# FIG. 1

# FIG. 2

# FIG. 3

**EP 1 556 744 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0784525 A
- DE 4291619 C2

- US 5604677 A